(19)

Europäisches
Patentamt
European
Patent Office
Office européen
des brevets

(11) **EP 4 163 834 A1**

(12) **EUROPEAN PATENT APPLICATION**

(43) Date of publication:
**12.04.2023 Bulletin 2023/15**

(21) Application number: **22189299.5**

(22) Date of filing: **08.08.2022**

(51) International Patent Classification (IPC):
**G06N 3/045** (2023.01)  **G06N 3/047** (2023.01)
**G06N 3/09** (2023.01)

(52) Cooperative Patent Classification (CPC):
**G06N 3/09; G06N 3/045; G06N 3/047**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.10.2021 KR 20210132185**

(71) Applicant: **Samsung Electronics Co., Ltd.
Suwon-si 16677 (KR)**

(72) Inventor: **CHOI, JUNHWI
16678 Suwon-si (KR)**

(74) Representative: **Arnold & Siedsma
Bezuidenhoutseweg 57
2594 AC The Hague (NL)**

(54) **ELECTRONIC APPARATUS AND METHOD WITH UNCERTAINTY ESTIMATION IMPLEMENTING DATA LABELS**

(57)     A training method is provided. The training method may include generating first prediction data based on first data by inputting the first data to a trained auxiliary prediction model, estimating a first uncertainty by inputting the first data and a first label to a primary uncertainty model, determining a first uncertainty loss based on the generated first prediction data, the first label, and the estimated first uncertainty, training the primary uncertainty model based on the determined first uncertainty loss, generating second prediction data based on second data by inputting the second data to a primary prediction model, estimating a second uncertainty by inputting the second data and a second label to the trained primary uncertainty model, determining a second uncertainty loss based on the generated second prediction data, the second label, and the estimated second uncertainty, and training the primary prediction model based on the determined second uncertainty loss.

FIG. 1

EP 4 163 834 A1

**Description**

BACKGROUND

The following description relates to an electronic apparatus and method with uncertainty estimation utilizing data label.

A typical neural network model may output a prediction value for a given input, and may estimate an aleatoric or statistical uncertainty.

In an example where noise is included in labeled data that is implemented to train the neural network model, the neural network model may not estimate an aleatoric uncertainty accurately.

Additionally, a typical auxiliary predictor may be distinguished from a primary predictor. The auxiliary predictor may be trained by clean data. Typically, to train the primary predictor by noisy data, an auxiliary label may be generated by the auxiliary predictor. Additionally, a label of the noisy data and the auxiliary label may be combined in a fixed ratio. In this example, prediction performance may vary based on the ratio.

The above information is presented as background information only, to assist in gaining an understanding of the present disclosure. No determination has been made, and no assertion is made, as to whether any of the above might be applicable as prior art with regard to the disclosure.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, a processor-implemented method, includes generating first prediction data based on first data by inputting the first data to a trained auxiliary prediction model; estimating a first uncertainty by inputting the first data and a first label to a primary uncertainty model; determining a first uncertainty loss based on the generated first prediction data, the first label, and the estimated first uncertainty; training the primary uncertainty model based on the determined first uncertainty loss; generating second prediction data based on second data by inputting the second data to a primary prediction model; estimating a second uncertainty by inputting the second data and a second label to the trained primary uncertainty model; determining a second uncertainty loss based on the generated second prediction data, the second label, and the estimated second uncertainty; and training the primary prediction model based on the determined second uncertainty loss.

The first label may include a noisy label and the second label may include a noisy label.

The method may include training the auxiliary prediction model based on a clean data set comprising third data and a third label.

The third label may include a clean label without noise.

The training of the auxiliary prediction model may include generating third prediction data based on the third data by inputting the third data to the auxiliary prediction model; estimating a third uncertainty by inputting the third data and the third label to an auxiliary uncertainty model; determining a third uncertainty loss based on the generated third prediction data, the third label, and the estimated third uncertainty; and training the auxiliary prediction model based on the determined third uncertainty loss.

The training of the auxiliary prediction model may include generating third prediction data based on the third data by inputting the third data to the auxiliary prediction model and estimating a third uncertainty; determining a third uncertainty loss based on the generated third prediction data, the estimated third uncertainty, and the third label; and training the auxiliary prediction model based on the determined third uncertainty loss.

The training of the auxiliary prediction model generating third prediction data based on the third data by inputting the third data to the auxiliary prediction model; determining a third uncertainty loss based on a difference between the generated third prediction data and the third label; and training the auxiliary prediction model based on the determined third uncertainty loss.

The method may further include training the trained primary uncertainty model based on the determined second uncertainty loss.

The first uncertainty may include aleatoric uncertainties, and the second uncertainty comprises aleatoric uncertainties.

In a general aspect, a processor implemented method includes generating prediction data based on input data of a plurality of prediction models respectively by implementing the plurality of prediction models; determining a plurality of uncertainty values respectively by inputting the generated prediction data and the input data to uncertainty models; determining weights corresponding to the generated prediction data based on the determined uncertainty values; applying the determined weights to the corresponding generated prediction data; and determining final prediction data based on results of the applying.

The determining of the final prediction data may include determining the final prediction data by ensembling results of the applying of the determined weights to the corresponding generated prediction data.

The determining of the weights corresponding to the generated prediction data may include when a first uncertainty value determined based on first prediction data and the input data, by a first uncertainty model is less than a second uncertainty value determined, based on second prediction data and the input, by a second uncertainty model, determining a weight of the first prediction data to be higher than a weight of the second prediction data.

Each of the uncertainty values may include an aleatoric uncertainty value.

In a general aspect, an electronic apparatus includes a memory, configured to store a trained auxiliary prediction model, a primary uncertainty model, and a primary prediction model; and a processor, configured to: generate first prediction data on first data by inputting the first data to the trained auxiliary prediction model, estimate a first uncertainty by inputting the first data and a first label to the primary uncertainty model, determine a first uncertainty loss based on the generated first prediction data, the first label, and the estimated first uncertainty, train the primary uncertainty model based on the determined first uncertainty loss, generate second prediction data based on second data by inputting the second data to the primary prediction model, estimate a second uncertainty by inputting the second data and a second label to the trained primary uncertainty model, determine a second uncertainty loss based on the generated second prediction data, the second label, and the estimated second uncertainty, and train the primary prediction model based on the determined second uncertainty loss.

The first label may include a noisy label and the second label may include a noisy label.

The processor may be configured to train the auxiliary prediction model based on a clean data set comprising third data and a third label.

The third label may include a clean label without noise.

In a general aspect, an electronic apparatus includes a memory configured to store a plurality of prediction models and a plurality of uncertainty models; and a processor configured to: generate prediction data based on input data of the prediction models respectively by implementing the prediction models, determine a plurality of uncertainty values respectively by inputting the generated prediction data and the input data to uncertainty models, determine weights corresponding to the generated prediction data based on the determined uncertainty values, apply the determined weights to the corresponding generated prediction data, and determine final prediction data based on results of the applying.

The processor may be configured to determine the final prediction data by ensembling results of the applying of the determined weights to the corresponding generated prediction data.

When a first uncertainty value determined based on first prediction data and the input data, by a first uncertainty model is less than a second uncertainty value determined, based on second prediction data and the input, by a second uncertainty model, the processor is configured to determine a weight of the first prediction data to be higher than a weight of the second prediction data.

In a general aspect, a processor-implemented method includes generating prediction data by inputting first data to one of an auxiliary prediction model; estimating an aleatoric uncertainty by inputting the first data and clean label data to an auxiliary uncertainty model; calculating an uncertainty loss based on the clean label data, the generated prediction data, and the estimated aleatoric uncertainty, and training the auxiliary prediction model and the auxiliary uncertainty model based on the uncertainty loss.

The uncertainty loss may be calculated based on a difference between the clean label data and the generated prediction data.

The clean label data may be data without noise.

Other features and aspects will be apparent from the following detailed description, the drawings, and the claims.

BRIEF DESCRIPTION OF DRAWINGS

FIG. 1 illustrates an example training method, in accordance with one or more embodiments.
FIG. 2 illustrates an example of joint training of an auxiliary prediction model and an auxiliary uncertainty model, in accordance with one or more embodiments.
FIG. 3 illustrates an example of training an auxiliary prediction model, in accordance with one or more embodiments.
FIG. 4 illustrates an example of training a primary uncertainty model, in accordance with one or more embodiments.
FIG. 5 illustrates an example of training a primary prediction model, in accordance with one or more embodiments.
FIG. 6 illustrates an example of joint training a primary prediction model and a trained primary uncertainty model, in accordance with one or more embodiments.
FIG. 7 illustrates an example configuration of an example electronic apparatus performing training, in accordance with one or more embodiments.

FIG. 8 is a flowchart illustrating an example operating method of an example electronic apparatus, in accordance with one or more embodiments.

FIGS. 9 to 10 illustrate an example operation of an example electronic apparatus including a trained primary prediction model and a trained uncertainty model, in accordance with one or more embodiments.

FIG. 11 is a flowchart illustrating an example operating method of an example electronic apparatus, in accordance with one or more embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness, noting that omissions of features and their descriptions are also not intended to be admissions of their general knowledge.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when an element, such as a layer, region, or substrate is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

The terminology used herein is for the purpose of describing particular examples only, and is not to be used to limit the disclosure. As used herein, the singular forms "a," "an," and "the" are intended to include the plural forms as well, unless the context clearly indicates otherwise. As used herein, the term "and/or" includes any one and any combination of any two or more of the associated listed items. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof.

In addition, terms such as first, second, A, B, (a), (b), and the like may be used herein to describe components. Each of these terminologies is not used to define an essence, order, or sequence of a corresponding component but used merely to distinguish the corresponding component from other component(s).

Unless otherwise defined, all terms, including technical and scientific terms, used herein have the same meaning as commonly understood by one of ordinary skill in the art to which this disclosure pertains and after an understanding of the disclosure of this application. Terms, such as those defined in commonly used dictionaries, are to be interpreted as having a meaning that is consistent with their meaning in the context of the relevant art and the disclosure of this application, and are not to be interpreted in an idealized or overly formal sense unless expressly so defined herein.

Hereinafter, example embodiments will be described in detail with reference to the accompanying drawings. When describing the example embodiments with reference to the accompanying drawings, like reference numerals refer to like components and a repeated description related thereto will be omitted.

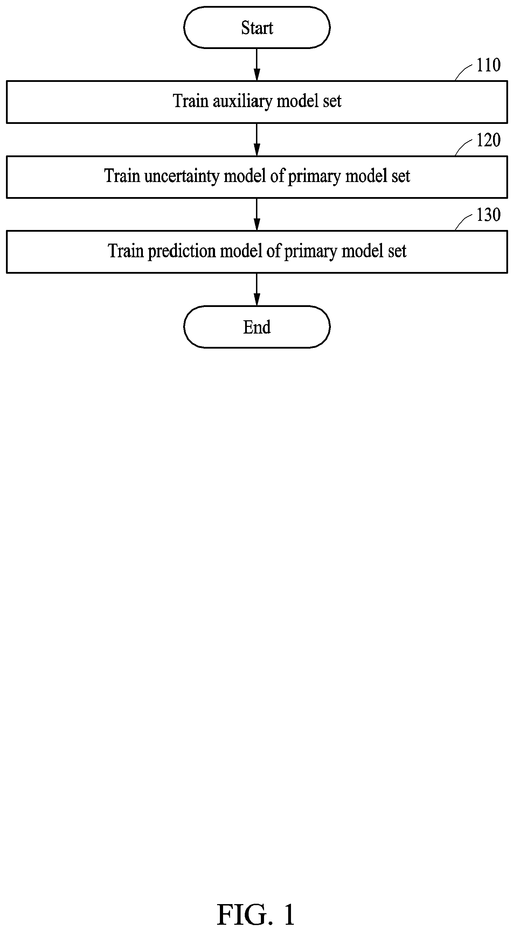

FIG. 1 illustrates an example training method, in accordance with one or more embodiments. The operations in FIG. 1 may be performed in the sequence and manner as shown. Many of the operations shown in FIG. 1 may be performed in parallel or concurrently. One or more blocks of FIG. 1, and combinations of the blocks, can be implemented by special purpose hardware-based computer that perform the specified functions, or combinations of special purpose hardware and computer instructions.

In an example, the training method to be described below may be performed by an electronic apparatus (or a training apparatus). Herein, the use of the term "may" with respect to an example or embodiment, e.g., as to what an example or embodiment may include or implement, means that at least one example or embodiment exists where such a feature is included or implemented while all examples and embodiments are not limited thereto.

Referring to FIG. 1, in operation 110, an example electronic apparatus may train an auxiliary model set. In a non-limited example, the example electronic apparatus may be implemented as a server, a desktop computer, a laptop computer, a tablet, a smartphone, a personal digital assistant or any device that may be configured to implement the present technology.

The auxiliary model set may include a prediction model that performs prediction from a given input, and an uncertainty model that estimates an uncertainty (for example, an aleatoric uncertainty) of the given input. The aleatoric uncertainty may represent an uncertainty that may be generated by noise inherent in the given input, or the variability in the outcome of an experiment which is due to inherently random effects. Hereinafter, the prediction model of the auxiliary model set is expressed by the term "auxiliary prediction model" and the uncertainty model of the auxiliary model set is expressed by the term "auxiliary uncertainty model".

In operation 110, the electronic apparatus may sample (or extract) data and a clean label from a training data set, and may train the auxiliary model set using the sampled or extracted data and the clean label. The training data set may include a plurality of pieces of data and a plurality of labels. A first portion of the plurality of labels may be clean labels without noise, and a second portion of the plurality of labels may be noisy labels including noise. The training data set may be of any of diverse types. In non-limiting examples, the training data set may be a data set for speech recognition training, a data set for object classification training, a data set for object recognition training, and a data set for molecular property prediction training, but the examples are not limited thereto.

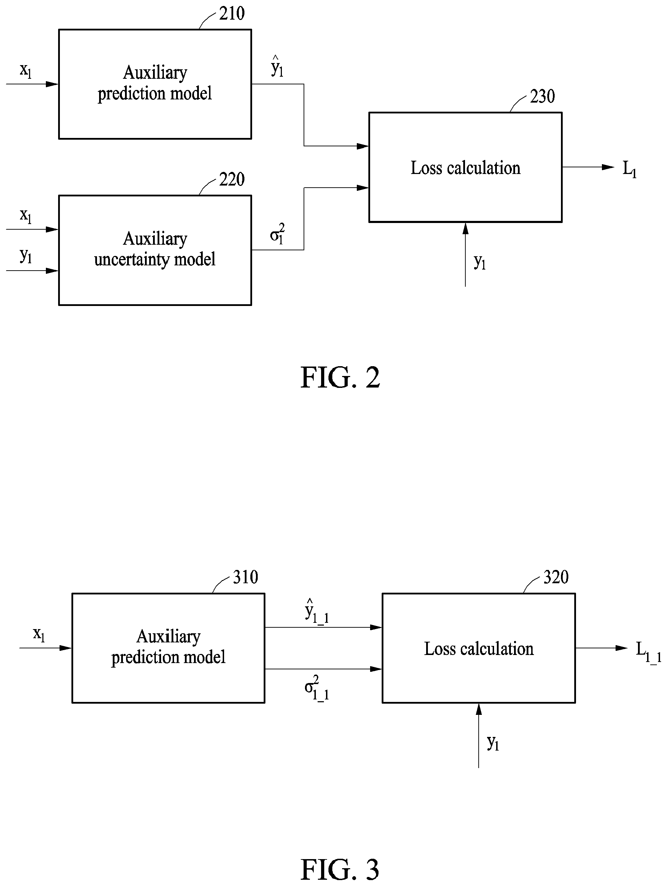

In an example, the electronic apparatus may sample (or extract) data $x_1$ and a clean label $y_1$ for the extracted data $x_1$ from a training data set, and may generate prediction data $\hat{y}_1$ based on the data $x_1$ by inputting the data $x_1$ and the clean label $y_1$ to the auxiliary prediction model. The electronic apparatus may estimate an aleatoric uncertainty $\sigma_1^2$ by inputting the data $x_1$ and the clean label $y_1$ to the auxiliary uncertainty model. The electronic apparatus may determine an uncertainty loss based on the prediction data $\hat{y}_1$, the clean label $\hat{y}_1$, and the aleatoric uncertainty $\sigma_1^2$ and may perform joint training on the auxiliary prediction model and the auxiliary uncertainty model based on the uncertainty loss. This will be described in detail with reference to FIG. 2. The example electronic apparatus may train only the auxiliary prediction model using the aleatoric uncertainty $\sigma_1^2$ based on implementation.

In operation 120, the electronic apparatus may train an uncertainty model of a primary model set. The primary model set may include a prediction model to perform prediction from a given input and an uncertainty model to estimate an uncertainty (in an example, an aleatoric uncertainty) of the given input. Hereinafter, the prediction model of the primary model set is expressed by the term "primary prediction model" and the uncertainty model of the primary model set is expressed by the term "primary uncertainty model".

In operation 120, the example electronic apparatus may train the primary uncertainty model using a training data set and a trained auxiliary prediction model.

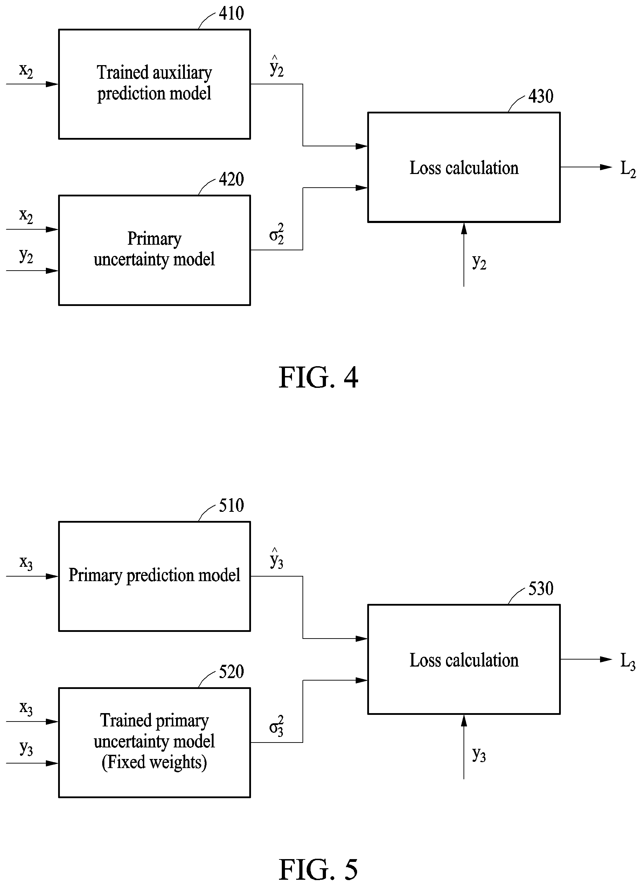

In an example, the electronic apparatus may sample (or extract) data $x_2$ and a label $y_2$ based on the data $x_2$ from a training data set. The label $y_2$ may be a noisy label including noise. The electronic apparatus may generate prediction data $y_2$ based on the data $x_2$ by inputting the data $x_2$ to the trained auxiliary prediction model. The electronic apparatus may estimate an aleatoric uncertainty $\sigma_2^2$ by inputting the data $x_2$ and the noisy label $y_2$ to the primary uncertainty model. The electronic apparatus may calculate an uncertainty loss using the data $x_2$, the noisy label $y_2$, and the aleatoric uncertainty $\sigma_2^2$ and may train the primary uncertainty model using the uncertainty loss. This will be described in detail with reference to FIG. 4.

In operation 130, the electronic apparatus may train the prediction model of the primary model set. The electronic apparatus may train the primary prediction model of the primary model set by utilizing a training data set and a trained primary uncertainty model.

In an example, the electronic apparatus may sample (or extract) data $x_3$ and a label $y_3$ based on the data $x_3$ from a training data set. The label $y_3$ may be a noisy label. The electronic apparatus may generate prediction data $\hat{y}_3$ based on the data $x_3$ by inputting the data $x_3$ to the primary prediction model. The electronic apparatus may estimate an aleatoric uncertainty $\sigma_3^2$ by inputting the data $x_3$ and the noisy label $y_3$ to the trained primary uncertainty model. The electronic apparatus may calculate an uncertainty loss using the data $x_3$, the noisy label $y_3$, and the aleatoric uncertainty $\sigma_3^2$ and may train the primary uncertainty model using the uncertainty loss. This will be described in detail with reference to FIG. 5.

FIG. 2 illustrates an example of joint training of an auxiliary prediction model and an auxiliary uncertainty model, in accordance with one or more embodiments.

As illustrated in FIG. 2, an auxiliary model set may include an auxiliary prediction model 210, and an auxiliary uncertainty model 220.

The electronic apparatus may obtain data $x_1$ and a clean label $y_1$ by performing sampling based on a training data set.

The electronic apparatus may generate prediction data $\hat{y}_1$ based on the data $x_1$ by inputting the data $x_1$ to the auxiliary prediction model 210.

The electronic apparatus may estimate an aleatoric uncertainty $\sigma_1^2$ by inputting the data $x_1$ and the clean label $y_1$ to the auxiliary uncertainty model 220. The auxiliary uncertainty model 220 may more accurately estimate the aleatoric uncertainty $\sigma_1^2$ by identifying a correlation between the data $x_1$ and the clean label $y_1$.

The electronic apparatus may perform uncertainty loss calculation 230 to calculate an uncertainty loss $L_1$ based on the clean label $y_1$, prediction data $\hat{y}_1$ output from the auxiliary prediction model, and the aleatoric uncertainty $\sigma_1^2$, output from the auxiliary uncertainty model. In an example, the electronic apparatus may calculate the uncertainty loss $L_1$ based on Equation 1 below.

Equation 1:

$$\mathrm{L} = \frac{1}{2\sigma^2} \|y - \hat{y}\|^2 + \frac{1}{2}\log \sigma^2$$

The electronic apparatus may perform joint training on the auxiliary prediction model 210 and the auxiliary uncertainty model 220 using the uncertainty loss $L_1$.

In an example, the electronic apparatus may train only the auxiliary prediction model 210 using the uncertainty loss $L_1$ based on implementation.

Accordingly, by iteratively performing sampling operations and the uncertainty loss calculation 230 described in FIG. 2, the electronic apparatus may iteratively perform joint training on the auxiliary prediction model 210 and the auxiliary uncertainty model 220, or may iteratively train only the auxiliary prediction model 210. Weights of the auxiliary prediction model 210 may be optimized through the iterative training. In this example, the electronic apparatus may not sample a noisy label from the training data set. The electronic apparatus may train the auxiliary prediction model 210 based on a clean data set (that is, various pieces of sampled data, and a clean label for each piece of the sampled data).

In an example which is different from the example of FIG. 2, the electronic apparatus may calculate an uncertainty loss based on a difference between the clean label $y_1$ and the prediction data $\hat{y}_1$, and may train the auxiliary prediction model 210 using the calculated loss.

FIG. 3 illustrates an example of training an auxiliary prediction model.

As illustrated in FIG. 3, unlike the auxiliary prediction model 210 of FIG. 2, an auxiliary prediction model 310 may estimate an aleatoric uncertainty from given input data $x_1$.

The electronic apparatus may input data $x_1$, sampled from a training data set, to the auxiliary prediction model 310. The auxiliary prediction model 310 may generate prediction data $\hat{y}_{1\_1}$ based on the input data $x_1$, and may estimate an aleatoric uncertainty $\sigma_{1\_1}^2$.

The electronic apparatus may perform uncertainty loss calculation 320 to calculate an uncertainty loss $L_{1\_1}$ based on a clean label $\hat{y}_1$, the prediction data $\hat{y}_{1\_1}$, and the aleatoric uncertainty $\sigma_{1\_1}^2$. In an example, the electronic apparatus may calculate the uncertainty loss $L_{1\_1}$ based on the above Equation 1.

The electronic apparatus may train the auxiliary prediction model 310 based on the uncertainty loss $L_{1\_1}$.

The electronic apparatus may iteratively train the auxiliary prediction model 310 by iteratively performing sampling and performing the uncertainty loss calculation 320. Weights of the auxiliary prediction model 310 may be optimized through the iterative training.

The electronic apparatus may implement a trained auxiliary prediction model to train a primary uncertainty model.

FIG. 4 illustrates an example of training a primary uncertainty model, in accordance with one or more embodiments.

As illustrated in FIG. 4, the electronic apparatus may obtain data $x_2$ and a noisy label $y_2$ by performing sampling on a training data set.

The electronic apparatus may generate prediction data $\hat{y}_2$ by inputting the data $x_2$ to a trained auxiliary prediction model 410.

In a non-limiting example, weights of the trained auxiliary prediction model 410 may be fixed.

The electronic apparatus may estimate an aleatoric uncertainty $\sigma_2^2$ by inputting the data $x_2$ and the noisy label

$y_2$ to a primary uncertainty model 420. The primary uncertainty model 420 may more accurately estimate the aleatoric uncertainty $\sigma_2{}^2$ by identifying a correlation between the data $x_2$ and the noisy label $y_2$.

The electronic apparatus may perform an uncertainty loss calculation 430 to calculate an uncertainty loss $L_2$ based on the noisy label $y_2$, the prediction data $\hat{y}_2$, and the aleatoric uncertainty $\sigma_2{}^2$. In an example, the electronic apparatus may calculate the uncertainty loss $L_2$ based on Equation 1 above.

The electronic apparatus may train a primary uncertainty model 420 based on the uncertainty loss $L_2$.

Although not illustrated in FIG. 4, the electronic apparatus may obtain data $x_a$ and a clean label $y_a$ by performing sampling on the training data set, and may generate prediction data $\hat{y}_a$ by inputting the data $x_a$ to the trained auxiliary prediction model 410.

The electronic apparatus may estimate an aleatoric uncertainty $\sigma_a{}^2$ by inputting the data $x_a$ and the clean label $y_a$ to the primary uncertainty model 420. A numerical value of the aleatoric uncertainty $\sigma_a{}^2$ of the primary uncertainty model 420 may be less than a numerical value of the aleatoric uncertainty $\sigma_2{}^2$. Specifically, since the primary uncertainty model 420 may estimate the aleatoric uncertainty $\sigma_a{}^2$ by receiving the clean label $y_a$ as an input, the numerical value of the aleatoric uncertainty $\sigma_a{}^2$ may be less than the numerical value of the aleatoric uncertainty $\sigma_2{}^2$ estimated by receiving the noisy label $y_2$ as an input.

The electronic apparatus may perform uncertainty loss calculation 430 to calculate an uncertainty loss $L_a$ based on the clean label $y_a$, the prediction data $\hat{y}_a$, and the aleatoric uncertainty $\sigma_a{}^2$. The electronic apparatus may train the primary uncertainty model 420 based on the uncertainty loss $L_a$. The electronic apparatus may update weights of the primary uncertainty model 420 based on the uncertainty loss $L_a$.

In an example, the primary uncertainty model 420 may be trained with assistance from the auxiliary prediction model 410 which is trained by using a clean data set. Accordingly, the primary uncertainty model 420 may more accurately estimate an aleatoric uncertainty based on an example where training is based on a noisy label received at the beginning as an input.

The electronic apparatus may optimize weights of the primary uncertainty model 420 through the iterative training described above.

FIG. 5 illustrates an example of training a primary prediction model, in accordance with one or more embodiments.

As illustrated in FIG. 5, the electronic apparatus may obtain data $x_3$ and a noisy label $y_3$ by performing sampling on a training data set.

In a non-limiting example, weights of a trained primary uncertainty model 520 may be fixed.

The electronic apparatus may generate prediction data $\hat{y}_3$ by inputting the training data $x_3$ to a primary prediction model 510.

The electronic apparatus may estimate an aleatoric uncertainty $\sigma_3{}^2$ by inputting the noisy label $y_3$ and the data $x_3$ to the trained primary uncertainty model 520.

The electronic apparatus may perform uncertainty loss calculation 530 to calculate an uncertainty loss $L_3$ based on the noisy label $y_3$, the prediction data $\hat{y}_3$, and the aleatoric uncertainty $\sigma_3{}^2$. In an example, the electronic apparatus may calculate the uncertainty loss $L_3$ based on Equation 1 above.

The electronic apparatus may train the primary prediction model 510 based on the uncertainty loss $L_3$.

Although not illustrated in FIG. 5, the electronic apparatus may obtain data $x_b$ and a clean label $y_b$ by performing sampling on the training data set and may generate prediction data $\hat{y}_b$ by inputting the data $x_b$ to the primary prediction model 510.

The electronic apparatus may estimate an aleatoric uncertainty $\sigma_b{}^2$ by inputting the data $x_b$ and the clean label $y_b$ to the trained primary uncertainty model 520.

The electronic apparatus may perform the uncertainty loss calculation 530 to calculate an uncertainty loss $L_b$ based on the clean label $y_b$, the prediction data $\hat{y}_b$, and the aleatoric uncertainty $\sigma_b{}^2$. The electronic apparatus may train the primary prediction model 510 by implementing the uncertainty loss $L_b$.

The electronic apparatus may optimize weights of the primary prediction model 510 through the iterative training described above.

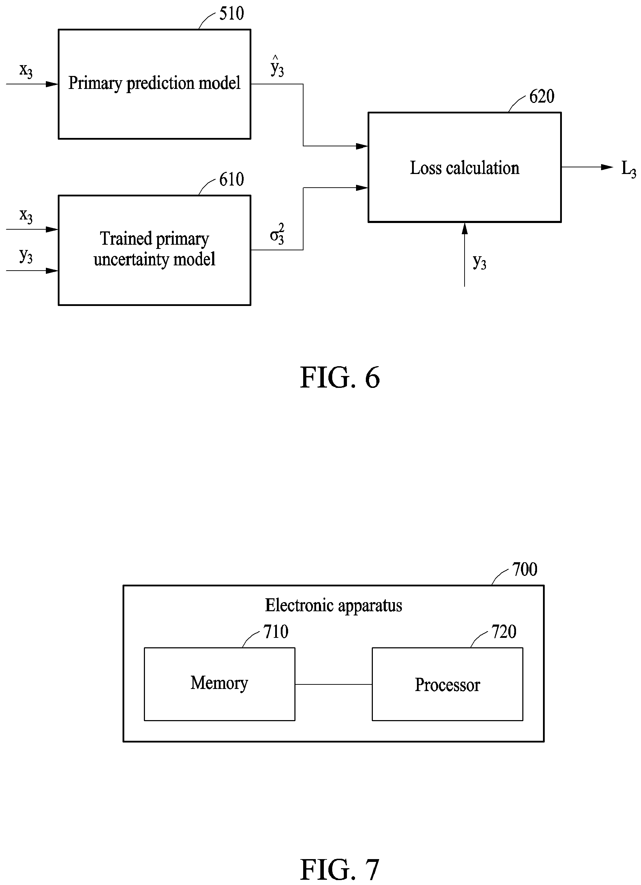

FIG. 6 illustrates an example of joint training of a primary prediction model and a trained primary uncertainty model, in accordance with one or more embodiments.

Unlike the example of FIG. 5, in an example of FIG. 6, weights of a trained primary uncertainty model 610 may be not fixed. The electronic apparatus may perform joint training on the primary prediction model 510 and the trained primary uncertainty model 610 based on an uncertainty loss $L_3$. The trained primary uncertainty model 610 may be fine-tuned, and thus, may more accurately estimate an aleatoric uncertainty of a given input.

FIG. 7 illustrates an example configuration of an electronic apparatus performing training, in accordance with one or more embodiments.

Referring to FIG. 7, the electronic apparatus 700 may include one or more memories 710 and one or more processors 720. The training may be performed by any apparatus described herein, e.g., including one or more processors, one or more memories storing instructions that, when executed by the one or more processors, configure the one or more processors to implement the respective operations. Such apparatuses or other apparatuses in various examples, will be referred to as an electronic apparatus with respect to FIG. 7, for convenience of explanation.

The processor 720 may perform the operations of the electronic apparatus described through FIGS. 1 to 6.

The processor 720 may generate first prediction data based on first data by inputting the first data to the trained auxiliary prediction model 410 of FIG. 4.

The processor 720 may estimate a first uncertainty by inputting the first data and a first label to the primary uncertainty model 420 of FIG. 4. In an example, the first label may be a noisy label, but is not limited thereto.

The processor 720 may determine a first uncertainty loss based on the first prediction data, the first label and the first uncertainty. In an example, the processor 720 may determine the first uncertainty loss based on Equation 1 above.

The processor 720 may train the primary uncertainty model 420 by implementing the first uncertainty loss.

The processor 720 may generate second prediction data based on second data by inputting the second data to the primary prediction model 510 of FIG. 5.

The processor 720 may estimate a second uncertainty by inputting the second data and a second label to the trained primary uncertainty models 520 of FIG. 5 or 610 of FIG. 6. The second label may be a noisy label, but is not limited thereto.

The processor 720 may determine a second uncertainty loss based on the second prediction data, the second label, and the second uncertainty. In an example, the processor 720 may determine the second uncertainty loss based on Equation 1 above.

The processor 720 may train the primary prediction model 510 by implementing the second uncertainty loss. As described in FIG. 5, since the weights of the trained primary uncertainty model 520 may be fixed, the processor 720 may not train the trained primary uncertainty model 520. As described in FIG. 6, the processor 720 may train the trained primary uncertainty model 610 by implementing the second uncertainty loss. In other words, since the weights of the trained primary uncertainty model 610 may not be fixed, the processor 720 may perform joint training on the primary prediction model 510 and the trained primary uncertainty model 610 based on the second uncertainty loss.

In an example, the processor 720 may train the auxiliary prediction model 210 of FIG. 2 based on a clean data set including third data and a third label. In this example, the third label may be a clean label.

In an example, the processor 720 may generate third prediction data based on the third data by inputting the third data to the auxiliary prediction model 210. The processor 720 may estimate a third uncertainty by inputting the third data and the third label to the auxiliary uncertainty model 220 of FIG. 2. The processor 720 may determine a third uncertainty loss based on the third prediction data, the third label, and the third uncertainty. The processor 720 may train the auxiliary prediction model 210 by implementing the third uncertainty loss. Since this has been described with reference to FIG. 2, a detailed description is not included here for conciseness.

In an example, the processor 720 may generate the third prediction data on the third data by inputting the third data on the auxiliary prediction model 210. The processor 720 may determine a loss based on a difference between the third prediction data and the third label. The processor 720 may train the auxiliary prediction model 210 by implementing the determined loss.

In an example, the processor 720 may generate the third prediction data based on the third data by inputting the third data to the auxiliary prediction model 310 of FIG. 3 and may estimate the third uncertainty. Unlike the auxiliary prediction model 210, the auxiliary prediction model 310 may not only predict, but may also estimate an uncertainty of a given input. The processor 720 may determine the third uncertainty loss based on the third prediction data, the third uncertainty, and the third label. The processor 720 may train the auxiliary prediction model 310 by implementing the third uncertainty loss. Since this has been described with reference to FIG. 3, a detailed description is not included here for conciseness.

The memory 710 may store at least one or all of an auxiliary prediction model, an auxiliary uncertainty model, a primary prediction model, and a primary uncertainty model. Additionally, the memory 710 may temporarily and/or permanently store data beneficial in performing training. The memory 710 may store at least one or all of models on which training is completed (that is, a training-completed auxiliary prediction model, a training-completed auxiliary uncertainty model, a training-completed primary prediction model, and a training-completed primary uncertainty model).

The description provided with reference to FIGS. 1 to 6 also applies to the description of FIG. 7, and thus a detailed description is not included for conciseness.

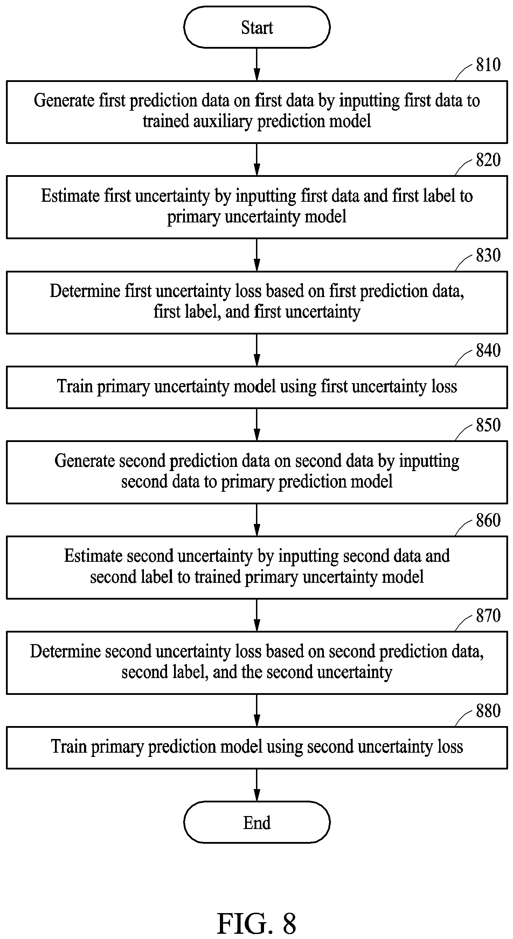

FIG. 8 is a flowchart illustrating an operating method of an electronic apparatus, in accordance with one or more embodiments. The operations in FIG. 8 may be performed in the sequence and manner as shown, or may be performed in a sequence or manner that is different from the sequence and manner shown. One or more blocks of FIG. 8, and combinations of the blocks, can be implemented by special purpose hardware-based computer that perform the specified functions, or combinations of special purpose hardware and computer instructions. In addition to the description of FIG. 8 below, the descriptions of FIGS. 1-7 are also applicable to FIG. 8, and are incorporated herein by reference. Thus, the above description may not be repeated here.

In operation 810, the electronic apparatus 700 of FIG. 7 may generate first prediction data based on first data by inputting the first data $x_2$ to the trained auxiliary prediction model 410 of FIG. 4.

In operation 820, the electronic apparatus 700 may estimate a first uncertainty by inputting the first data $x_2$ and a first label $y_2$ to the primary uncertainty model 420 of FIG. 4.

In operation 830, the electronic apparatus 700 may determine a first uncertainty loss based on the first prediction data, the first label, and the first uncertainty.

In operation 840, the electronic apparatus 700 may train the primary uncertainty model 420 by implementing the first uncertainty loss.

In operation 850, the electronic apparatus 700 may generate second prediction data based on second data $x_3$ by inputting the second data $x_3$ to the primary prediction model 510 of FIG. 5.

In operation 860, the electronic apparatus 700 may estimate a second uncertainty by inputting the second data and a second label to the trained primary uncertainty models 520 of FIG. 5 or 610 of FIG. 6.

In operation 870, the electronic apparatus 700 may determine a second uncertainty loss based on the second prediction data, the second label, and the second uncertainty.

In operation 880, the electronic apparatus 700 may train the primary prediction model 510 by implementing the second uncertainty loss.

The description provided with reference to FIGS. 1 to 7 also applies to the description of FIG. 8, and thus a detailed description is not included for conciseness.

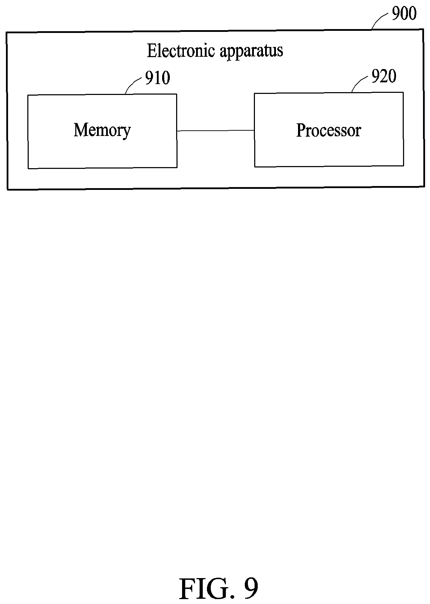

FIGS. 9 to 10 illustrate an example operation of an electronic apparatus including a trained primary prediction model and a trained uncertainty model, in accordance with one or more embodiments.

Referring to FIG. 9, an electronic apparatus 900 may include a memory 910 and a processor 920. The training may be performed by any apparatus described herein, e.g., including one or more processors, one or more memories storing instructions that, when executed by the one or more processors, configure the one or more processors to implement the respective operations. Such apparatuses or other apparatuses in various examples, will be referred to as an electronic apparatus with respect to FIG. 9, for convenience of explanation.

The memory 910 may store a trained primary prediction model and/or a trained uncertainty model. Hereinafter, in FIGS. 9 to 11, the trained primary prediction model is expressed by the term "prediction model", and the trained uncertainty model is expressed by the term "uncertainty model".

In an example, the processor 920 may generate prediction data based on input data of the prediction model by implementing the prediction model.

In an example, the electronic apparatus 900 may be included in a server. The processor 920 may perform a task by inputting data (for example, a sentence or an image) received from a user terminal (for example, a smartphone, a tablet PC, and a PC) to the prediction model. The task, in a non-limited example, may include speech recognition, object detection, object classification, depth estimation, object recognition, and identity verification, but examples are not limited thereto. The processor 920 may predict a material property of chemical data (for example, string data representing a molecule and a molecular structure (or, a molecular graph)) by inputting the chemical data to the prediction model.

In an example, the electronic apparatus 900 may be included in an autonomous vehicle, a user terminal, and an Internet of Things (IoT) device. The processor 920 may receive sensing data from a sensor and may perform a task by inputting the sensing data to the prediction model. Since the task may include the examples described above, a detailed description is not included.

In an example, the memory 910 may store a plurality of prediction models and a plurality of uncertainty models. The processor 920 may generate prediction data on input data of the prediction models respectively by implementing the plurality of prediction models and may determine a plurality of uncertainty values by inputting the generated prediction data and the input data to the uncertainty models respectively. The processor 920 may determine weights of the prediction data respectively implementing the determined uncertainty values.

In an example where a first uncertainty value determined by a first uncertainty model that receives first prediction data and data as inputs is less than a second uncertainty value determined by a second uncertainty model receiving second prediction data and data as inputs, the processor 920 may determine a weight of the first prediction data to be higher than a weight of the second prediction data. The processor 920 may apply the determined weights to the prediction data respectively, and may determine final prediction data based on application results.

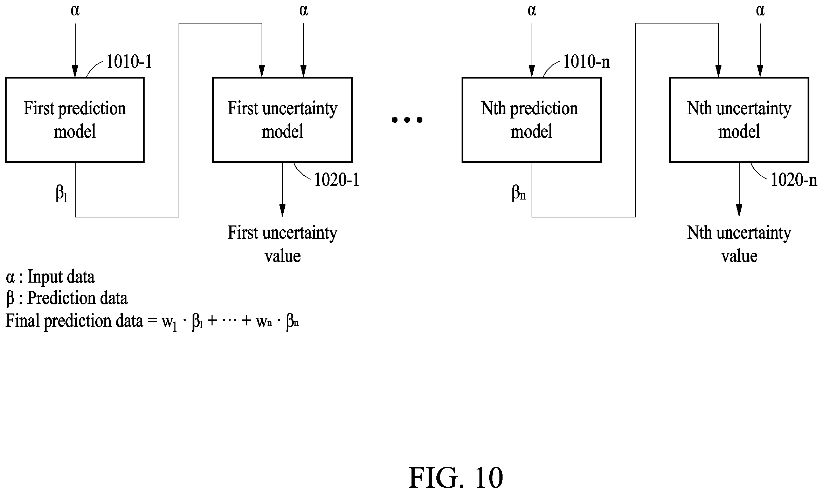

As illustrated in FIG. 10, the processor 920 may generate prediction data $\beta_1$ to $\beta_n$ based on input data $\alpha$ by implementing prediction models 1010-1 to 1010-n. The processor 920 may determine a plurality of uncertainty values by inputting the input data $\alpha$ and the prediction data $\beta_1$ to $\beta_n$ to corresponding uncertainty models 1020-1 to 1020-n.

The processor 920 may determine a first uncertainty value by inputting the prediction data $\beta_1$ and the input data $\alpha$ to the uncertainty model 1020-1 and may determine an nth uncertainty value by inputting the prediction data $\beta_n$ and the input data $\alpha$ to the uncertainty model 1020-n.

The processor 920 may determine weights of the prediction data $\beta_1$ to $\beta_n$ respectively based on the first to nth uncertainty values. As illustrated in FIG. 10, if the first uncertainty value is the largest among the first to nth uncertainty values, the processor 920 may determine a weight $\omega_1$ of the prediction data $\beta_1$ to be smallest, and if the nth uncertainty value is the smallest, the processor 920 may determine a weight $\omega_n$ of the prediction data $\beta_n$ to be largest.

The processor 920 may apply the determined weights to the prediction data $\beta_1$ to $\beta_n$ respectively, or may determine final prediction data by ensembling results of applying as illustrated in FIG. 10.

As illustrated in FIG. 10, the processor 920 may perform the above-described tasks (as non-limited examples, speech recognition and object recognition) based on the prediction models, may ensemble results of applying the weights to outputs of the respective prediction models, and may determine a result of ensembling as a final task result.

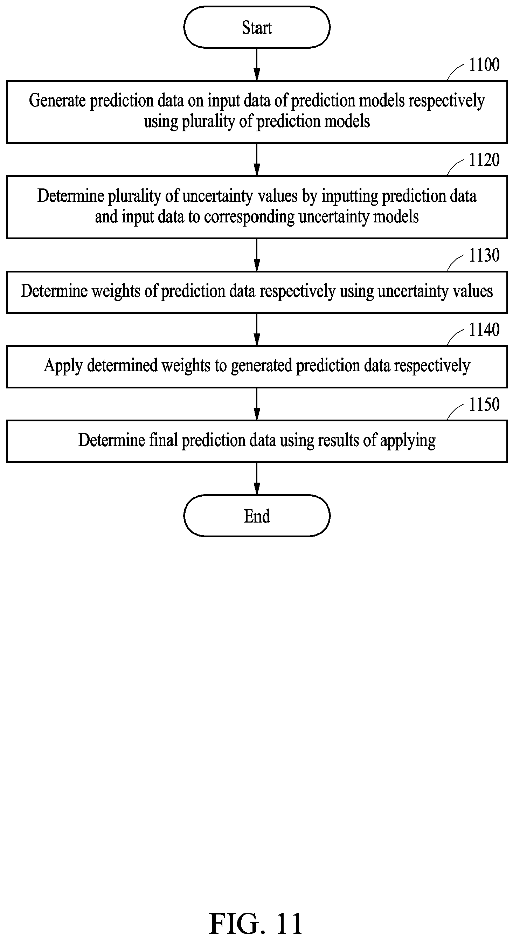

FIG. 11 is a flowchart illustrating an operating method of the electronic apparatus of FIG. 9, in accordance with one or more embodiments. The operations in FIG. 11 may be performed in the sequence and manner as shown, or may be performed in a sequence or manner that is different from the sequence and manner shown. One or more blocks of FIG. 11, and combinations of the blocks, can be implemented by special purpose hardware-based computer that perform the specified functions, or combinations of special purpose hardware and computer instructions. In addition to the description of FIG. 11 below, the descriptions of FIGS. 1-10 are also applicable to FIG. 11, and are incorporated herein by reference. Thus, the above description may not be repeated here.

In operation 1100, the electronic apparatus 900 of FIG. 9 may generate prediction data on input data of prediction models respectively by implementing the prediction models.

In operation 1120, the electronic apparatus 900 may determine a plurality of uncertainty values by inputting the prediction data and the input data to the corresponding uncertainty models.

In operation 1130, the electronic apparatus 900 may determine weights of the respective prediction data based on the uncertainty values.

In operation 1140, the electronic apparatus 900 may apply the determined weights to the generated prediction data respectively.

In operation 1150, the electronic apparatus 900 may determine final prediction data using results of applying.

The electronic apparatus 700, memory 710, processor 720, electronic apparatus 900, memory 910, and processor 920, with respect to FIGS. 1-11, and that perform operations described in this application are implemented as and by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods of FIGS. 1-11 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. The instructions or software may be written using any programming language based on the block diagrams and the flow charts illustrated in the drawings and the corresponding descriptions in the specification, which disclose algorithms for performing the operations performed by the hardware components and the methods as described above. The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

A number of example embodiments have been described above. Nevertheless, it should be understood that various modifications may be made to these example embodiments. In an example, suitable results may be achieved if the described techniques are performed in a different order and/or if components in a described system, architecture, device, or circuit are combined in a different manner and/or replaced or supplemented by other components or their equivalents.

While this disclosure includes specific examples, it will be apparent after an understanding of the disclosure of this application that various changes in form and details may be made in these examples without departing from the scope of the appended claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, and all variations within the scope of the appended claims are to be construed as being included in the disclosure.

**Claims**

1. A processor-implemented method, comprising:

   generating first prediction data based on first data by inputting the first data to a trained auxiliary prediction model;
   estimating a first uncertainty by inputting the first data and a first label to a primary uncertainty model;
   determining a first uncertainty loss based on the generated first prediction data, the first label, and the estimated first uncertainty;
   training the primary uncertainty model based on the determined first uncertainty loss;
   generating second prediction data based on second data by inputting the second data to a primary prediction model;
   estimating a second uncertainty by inputting the second data and a second label to the trained primary uncertainty model;

determining a second uncertainty loss based on the generated second prediction data, the second label, and the estimated second uncertainty; and

training the primary prediction model based on the determined second uncertainty loss.

2. The method of claim 1, wherein the first label comprises a noisy label and the second label comprises a noisy label.

3. The method of claim 1 or 2, the method further comprising training the auxiliary prediction model based on a clean data set comprising third data and a third label.

4. The method of claim 3, wherein the third label comprises a clean label without noise.

5. The method of claim 3 or 4, wherein the training of the auxiliary prediction model comprises:

generating third prediction data based on the third data by inputting the third data to the auxiliary prediction model;
estimating a third uncertainty by inputting the third data and the third label to an auxiliary uncertainty model;
determining a third uncertainty loss based on the generated third prediction data, the third label, and the estimated third uncertainty; and
training the auxiliary prediction model based on the determined third uncertainty loss.

6. The method of claim 3 or 4, wherein the training of the auxiliary prediction model comprises:

generating third prediction data based on the third data by inputting the third data to the auxiliary prediction model and estimating a third uncertainty;
determining a third uncertainty loss based on the generated third prediction data, the estimated third uncertainty, and the third label; and
training the auxiliary prediction model based on the determined third uncertainty loss.

7. The method of claim 3 or 4, wherein the training of the auxiliary prediction model comprises:

generating third prediction data based on the third data by inputting the third data to the auxiliary prediction model;
determining a third uncertainty loss based on a difference between the generated third prediction data and the third label; and
training the auxiliary prediction model based on the determined third uncertainty loss.

8. The method of any of the previous claims, the method further comprising training the trained primary uncertainty model based on the determined second uncertainty loss.

9. The method of any of the previous claims, wherein the first uncertainty comprises aleatoric uncertainties, and wherein the second uncertainty comprises aleatoric uncertainties, and
wherein, in so far as depending on claim 5 or 6, the third uncertainty preferably comprises an aleatoric uncertainty.

10. An electronic apparatus, comprising:

a memory configured to store a trained auxiliary prediction model, a primary uncertainty model, and a primary prediction model; and
a processor configured to perform the method according to any of the previous claims.

11. A processor-implemented method, the method comprising:

generating prediction data based on input data of a plurality of prediction models respectively by implementing the plurality of prediction models, wherein the plurality of prediction models preferably comprises primary prediction models trained according to the method of any of claims 1-9;
determining a plurality of uncertainty values respectively by inputting the generated prediction data and the input data to uncertainty models, wherein the plurality of uncertainty models preferably comprise uncertainty models trained according to the method of any of claims 1-9;
determining weights corresponding to the generated prediction data based on the determined uncertainty values;
applying the determined weights to the corresponding generated prediction data; and
determining final prediction data based on results of the applying.

12. The method of claim 11, wherein the determining of the final prediction data comprises determining the final prediction data by ensembling results of the applying of the determined weights to the corresponding generated prediction data.

13. The method of claim 11 or 12, wherein the determining of the weights corresponding to the generated prediction data comprises:
when a first uncertainty value determined based on first prediction data and the input data, by a first uncertainty model is less than a second uncertainty value determined, based on second prediction data and the input, by a second uncertainty model, determining a weight of the first prediction data to be higher than a weight of the second prediction data.

14. The method of any of the claims 11-13, wherein each of the uncertainty values comprises an aleatoric uncertainty value.

15. An electronic apparatus, comprising:

a memory configured to store a plurality of prediction models and a plurality of uncertainty models, wherein the plurality of prediction models and the plurality of uncertainty models preferably comprise primary prediction models and primary uncertainty models, respectively, trained according to the method of any of claims 1-9; and
a processor configured to perform the method according to any of the claims 11-14.

```
        ╭─────────╮
        │  Start  │
        ╰─────────╯
             │
             ▼
┌────────────────────────────────────┐  ⌐110
│      Train auxiliary model set      │
└────────────────────────────────────┘
             │
             ▼
┌────────────────────────────────────┐  ⌐120
│ Train uncertainty model of primary  │
│            model set                │
└────────────────────────────────────┘
             │
             ▼
┌────────────────────────────────────┐  ⌐130
│ Train prediction model of primary   │
│            model set                │
└────────────────────────────────────┘
             │
             ▼
        ╭─────────╮
        │   End   │
        ╰─────────╯
```

# FIG. 1

## FIG. 2

## FIG. 3

FIG. 4

FIG. 5

x_3 → **Primary prediction model** (510) → $\hat{y}_3$

x_3, y_3 → **Trained primary uncertainty model** (610) → $\sigma_3^2$

$\hat{y}_3$, $\sigma_3^2$ → **Loss calculation** (620) → $L_3$

$y_3$ →

## FIG. 6

**Electronic apparatus** (700)

**Memory** (710) — **Processor** (720)

## FIG. 7

Start

810

Generate first prediction data on first data by inputting first data to trained auxiliary prediction model

820

Estimate first uncertainty by inputting first data and first label to primary uncertainty model

830

Determine first uncertainty loss based on first prediction data, first label, and first uncertainty

840

Train primary uncertainty model using first uncertainty loss

850

Generate second prediction data on second data by inputting second data to primary prediction model

860

Estimate second uncertainty by inputting second data and second label to trained primary uncertainty model

870

Determine second uncertainty loss based on second prediction data, second label, and the second uncertainty

880

Train primary prediction model using second uncertainty loss

End

FIG. 8

900

Electronic apparatus

910

Memory

920

Processor

FIG. 9

FIG. 10

First prediction model — 1010-1
First uncertainty model — 1020-1
First uncertainty value

Nth prediction model — 1010-n
Nth uncertainty model — 1020-n
Nth uncertainty value

$\alpha$ : Input data
$\beta$ : Prediction data
Final prediction data $= w_1 \cdot \beta_1 + \cdots + w_n \cdot \beta_n$

Start

1100

Generate prediction data on input data of prediction models respectively using plurality of prediction models

1120

Determine plurality of uncertainty values by inputting prediction data and input data to corresponding uncertainty models

1130

Determine weights of prediction data respectively using uncertainty values

1140

Apply determined weights to generated prediction data respectively

1150

Determine final prediction data using results of applying

End

FIG. 11

Europäisches
Patentamt

European
Patent Office

Office européen
des brevets

## EUROPEAN SEARCH REPORT

**Application Number**

EP 22 18 9299

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/073631 A1 (KADAYAM VISWANATHAN RAVINATH KAUSIK [US] ET AL) 11 March 2021 (2021-03-11) * paragraph [0054] – paragraph [0081]; figures 1-9 * | 1-15 | INV.<br>G06N3/045<br>G06N3/047<br>G06N3/09 |
| X | SARAWGI UTKARSH ET AL: "Uncertainty-Aware Boosted Ensembling in Multi-Modal Settings", 2021 INTERNATIONAL JOINT CONFERENCE ON NEURAL NETWORKS (IJCNN), IEEE, 18 July 2021 (2021-07-18), pages 1-9, XP033975184, DOI: 10.1109/IJCNN52387.2021.9534161 [retrieved on 2021-09-08] * Section III; figure 1 * | 1-15 | |
| A | SHI HU ET AL: "A New Perspective on Uncertainty Quantification of Deep Ensembles", ARXIV.ORG, CORNELL UNIVERSITY LIBRARY, 201 OLIN LIBRARY CORNELL UNIVERSITY ITHACA, NY 14853, 16 June 2020 (2020-06-16), XP081686236, * Sections 3-5 * | 1-15 | TECHNICAL FIELDS SEARCHED (IPC)<br><br>G06N |

The present search report has been drawn up for all claims

| Place of search | Date of completion of the search | Examiner |
|---|---|---|
| The Hague | 31 January 2023 | Jacobs, Jan-Pieter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 9299

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2023

| Patent document cited in search report | Publication date | Patent family member(s) | Publication date |
|---|---|---|---|
| US 2021073631 A1 | 11-03-2021 | NONE | |

For more details about this annex : see Official Journal of the European Patent Office, No. 12/82